(19) Europäisches Patentamt
European Patent Office
Office européen des brevets

(11) EP 0 750 013 A2

(12) **EUROPÄISCHE PATENTANMELDUNG**

(43) Veröffentlichungstag:
**27.12.1996 Patentblatt 1996/52**

(21) Anmeldenummer: **96810384.6**

(22) Anmeldetag: **11.06.1996**

(51) Int Cl.6: **C08K 13/02**, C08L 27/06, C08L 25/12
// (C08K13/02, 3:16, 5:57)

(84) Benannte Vertragsstaaten:
**BE DE DK ES FR GB IT NL SE**

(30) Priorität: **20.06.1995 CH 1809/95**

(71) Anmelder: **Ciba SC Holding AG**
**4057 Basel (CH)**

(72) Erfinder:
- **Kuhn, Karl Josef, Dr.**
**64686 Lautertal (DE)**
- **Wehner, Wolfgang, Dr.**
**64372 Ober-Ramstadt (DE)**

(54) **Stabilisierte PVC-Zusammensetzungen zur Herstellung von Formkörpern**

(57) Es wird die Verwendung von

(a) mindestens einer Organozinnverbindung der Formel I oder II

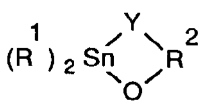

(I)

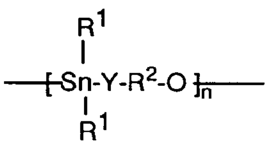

(II)

worin n eine Zahl von 1 bis 6 ist,
$R^1$ $C_4$-$C_8$-Alkyl bedeutet,
Y für -S- oder -O- steht,
wenn Y für -S- steht, $R^2$ $-(CH_2)_2-CO-$ oder

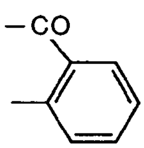

ist,
wenn Y für -O- steht, $R^2$ $-CO-R^3-CO-$ bedeutet, und
$R^3$ $C_1$-$C_{12}$ Alkylen, $C_2$-$C_{12}$-Alkenylen oder o- oder p-Phenylen darstellt, sowie

(b) mindestens einem Perchlorat eines ein- oder zweiwertigen Metalls in Polymerzusammensetzungen enthaltend

(c) 20-80 Gew.-Teilen eines Vinylchlorid-Homopolymeren (PVC),

(d) 80-20 Gew.-Teilen mindestens eines thermoplastischen Copolymerisats auf der Basis von Styrol und Acrylnitril,

EP 0 750 013 A2

beschrieben. Diese Zusammensetzungen weisen eine verbesserte thermische und mechanische Belastbarkeit auf und können gut im Spritzguß- oder Extrusionsverfahren zu Formkörpern mit hoher Wärmeformbeständigkeit verarbeitet werden.

## Beschreibung

Die Erfindung betrifft die Verwendung von Zusammensetzungen aus einem Vinylhalogenid-Homopolymeren (PVC) und einem thermoplastischen Copolymerisat auf Basis von Styrol und Acrylnitril, die mindestens eine Organozinnverbindung und ein Perchlorat eines ein- oder zweiwertigen Metalls als Stabilisatorkombination enthalten, in Verfahren zur Herstellung von Formteilen.

Organozinnverbindungen werden üblicherweise als Stabilisatoren bei der Extrusion und Spritzgußverarbeitung von PVC/ABS Compounds eingesetzt. Bei solchen Verfahren kann das Material auf zweierlei Weise belastet werden: Zum einen durch Scherkräfte (frikativ) und zum anderen durch hohe Temperaturen. In beiden Fällen steigt die Beanspruchung bei längeren Verweilzeiten im Verarbeitungsgerät.

Bei PVC/ABS Spritzgußmassen strebt man eine möglichst hohe Wärmeformbeständigkeit an, weil das für die Verarbeitung und Anwendung Vorteile bietet. Man setzt daher z.B. feste statt flüssige Organozinnstabilisatoren ein, welche aber den Nachteil haben, die Schmelzviskosität zu erhöhen. Man kann dem zum Teil begegnen, indem man bei höheren Temperaturen verarbeitet, doch kann dies zu Erscheinungen der thermischen Zersetzung führen (Verfärbung des Produktes und Beeinträchtigung seiner mechanischen Eigenschaften).

Ein weiterer Nachteil der festen Organozinnstabilisatoren ist, daß die Masse stärker an den Oberflächen der Verarbeitungsmaschine klebt, so daß Reibung und Scherkräfte das Material schädigen können. Dies kann durch Zusatz von Gleitmitteln nur begrenzt kompensiert werden, da diese einen negativen Einfluß auf die Wärmeformbeständigkeit ausüben.

Für derartige Anwendungen sucht man weiterhin nach wirksamen Stabilisator-kombinationen, welche unter Beibehaltung der Wärmeformbeständigkeit einen größtmöglichen Schutz gegen den Abbau durch thermische und mechanische Belastungen bieten.

Organozinnverbindungen und Halogensauerstoffsäuresalze wurden als Stabilisatoren für PVC eingesetzt (JP 78-59,744). Auch die Kombination von Perchloraten und Organozinnverbindungen wurde zur Erhöhung der Thermostabilität von PVC Folien vorgeschlagen (EP-A-0-574,348).

Bestimmte Organozinnverbindungen wurden auch zusammen mit Thioethern (oder auch Disulfiden) und Perchloraten zum Stabilisieren von PVC empfohlen (JP Kokai 01-236,252, JP Kokai 03,168,241).

Es wurde nun gefunden, daß eine Stabilisatorkombination aus bestimmten, Zinn-Sauerstoff-Bindungen enthaltenden Organozinnverbindungen und Perchloraten es ermöglicht, besonders PVC/ABS-Blends und Compounds überraschend problemlos und ohne die oben erwähnten Nachteile nach dem Spritzguß- oder Extrusionsverfahren zu Produkten mit hoher Wärmeformbeständigkeit zu verarbeiten.

Die Erfindung betrifft somit die Verwendung von

(a) mindestens einer Organozinnverbindung der Formel I oder II

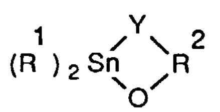

(I)

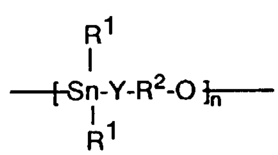

(II)

worin n eine Zahl von 1 bis 6 ist,
$R^1$ $C_4$-$C_8$-Alkyl bedeutet,
Y für -S- oder -O- steht,
wenn Y für -S- steht, $R^2$ $-(CH_2)_2$-CO- oder

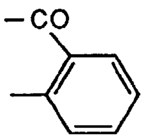 ist,

wenn Y für -O- steht, $R^2$ -CO-$R^3$-CO- bedeutet, und
$R^3$ $C_1$-$C_{12}$ Alkylen, $C_2$-$C_{12}$-Alkenylen oder o- oder p-Phenylen darstellt, sowie

(b) mindestens einem Perchlorat eines ein- oder zweiwertigen Metalls zur Herstellung von stabilisierten Formkörpern mit hoher Wärmeformbeständigkeit bestehend
aus Polymerzusammensetzungen enthaltend
(c) 20-80 Gew.-Teilen eines Vinylchlorid-Homopolymeren (PVC),
(d) 80-20 Gew.-Teilen mindestens eines thermoplastischen Copolymerisats auf der Basis von Styrol und Acrylnitril,

im Spritzguß- oder Extrusionsverfahren.

Die Komponente (d) kann insbesondere ein Copolymerisat aus der Gruppe ABS und SAN sein. Dabei bedeuten ABS: Acrylnitril-Butadien-Styrol(Pfropfpolymerisat aus Styrol und Acrylnitril/Butadienkautschuk) und SAN: Styrol-Acrylnitril-Copolymerisat.

Bevorzugt sind in den Zusammensetzungen 20 bis 50% der Komponente (c) und 80 bis 50% der Komponente (d) enthalten.

Bevorzugt werden ferner Polymerzusammensetzungen verwendet, die als Komponenten (c) und (d) eine Mischung aus 25-75 Gew.-% PVC und 75-25 Gew.-% der genannten Copolymerisate enthalten. Beispiele für solche Zusammensetzungen sind: 25-50 Gew.-% PVC und 75-50 Gew.-% Copolymerisate bzw. 40-75 Gew.-% PVC und 60-25 Gew.-% Copolymerisate. Bevorzugte Copolymerisate sind ABS und SAN insbesondere ABS. In der Zusammensetzung können eines oder beide genannten Copolymerisate vorhanden sein.

Im folgenden sind mit "Zusammensetzungen" jeweils die aus mindestens den oben beschriebenen Komponenten (a) bis (d) bestehenden gemeint.

Die Zusammensetzungen können weitere Copolymerisate als Modifikatoren enthalten. Neben den oben genannten können dies auch NBR (Acrylnitril-Butadien), NAR (Acrylnitril-Acrylat) oder EVA (Ethylen-Vinylacetat) sein. Es ist auch möglich, die genannten Copolymerisate selbst als Modifikatoren einzusetzen. Der Einsatz von Modifikatoren, beispielsweise als Blends oder als Pfropf-Copolymerisate, zur Verbesserung der Gebrauchseigenschaften ist dem Fachmann bekannt. Es können insbesondere bis zu 20 Gewichtsteile, bezogen auf die Summe von (c) und (d), an Modifikatoren vorhanden sein.

Aus der Chemie der Organozinnstabilisatoren weiß man, daß diese im stabilisierten Substrat oft nicht mehr in derselben Form vorliegen, wie sie zugegeben wurden. Es entstehen gewöhnlich Reaktions-(Komproportionierungs-)produkte. Die Erfindung umfaßt selbstverständlich auch die Verwendung von Zusammensetzungen, die solche aus den Verbindungen der Komponente (a), entsprechend den Formeln I und II, entstandenen Produkte enthalten.

Die Organozinnverbindungen der Formeln I und II sind bekannt (Siehe z.B. die eingangs genannten Literaturstellen sowie US 5,021,491 und die dort referierten: US 2,731,482, US,2,731,484, US 2,713,585, US 2,648,650, US 3,507,827). Insbesondere kann es sich um Carboxylate oder Mercaptocarboxylate handeln:

Ein typisches Mercaptocarboxylat ist polymeres Di-n-butylzinnmercaptopropionat,

$$[(n\text{-}C_4H_9)_2Sn\text{-}S\text{-}CH_2\text{-}CH_2\text{-}CO\text{-}O]_n.$$

Typische Carboxylate sind polymeres Di-n-butylzinnmaleat oder Di-n-octvlzinnmaleat. Es können auch Gemische vorliegen, wie z.B. das Gemisch bestehend aus 40 Gew.-% der Verbindung

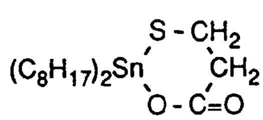

und 60 Gew.-% der Verbindung

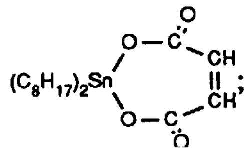

oder das Gemisch bestehend aus 66,7 Gew.-% der Verbindung

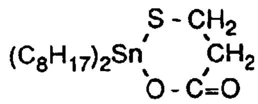

und 33,3 Gew.-% der Verbindung

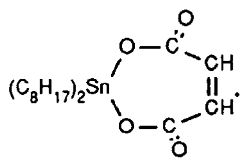

Komponente (a) ist vorzugsweise zu 0,5 bis 5%, bezogen auf [(c) + (d)], in den Zusammensetzungen enthalten.
Gemeinsam mit den Verbindungen der Komponente (a) der Formeln I und II können in den Zusammensetzungen auch noch weitere Zinnstabilisatoren enthalten sein, sofern sie die durch die genannten Verbindungen erzielten verbesserten Eigenschaften nicht nachteilig beeinflussen. Bevorzugt sind jedoch die Zusammensetzungen, welche neben den oben beschriebenen Organozinnverbindungen der Komponente (a) und deren Komproportionierungsprodukten keine weiteren Zinnstabilisatoren enthalten.

$R^1$ als $C_4$-$C_8$-Alkyl ist z.B. n-Butyl, Isobutyl, sec-Butyl, tert-Butyl, Pentyl, Isopentyl, Hexyl, Heptyl, Octyl, Isooctyl oder 2-Ethylhexyl,

$R^1$ hat bevorzugt die Bedeutung von Butyl oder Octyl, besonders von n-Butyl, n-Octyl oder Isooctyl.

$R^3$ als $C_2$-$C_{12}$-Alkenylen bedeutet einen zweiwertigen Alkenylrest und leitet sich z.B. von folgenden Alkenylresten ab: Ethenyl, Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl. Bevorzugt sind davon $C_2$-$C_4$-Alkenylenreste.

$R^3$ als $C_1$-$C_{12}$-Alkylen bedeutet einen zweiwertigen Alkylrest im Rahmen der angegebenen Kettenlängen, z.B. Methylen, Ethylen, $-CH(C_1-C_{10}\text{-Alkyl})-CH_2-$ (z.B. $-CH(CH_3)-CH_2-$), $-(CH_2)_3-$, $-(CH_2)_4-$, $-(C_2)_6-$, $-(CH_2)_8-$, $-(CH_2)_{12}-$,$-CH_2-CH(C_2H_5)-(CH_2)_4-$, $-CH_2-C(CH_3)_2-CH_2-$; wenn die Reste geradkettig sind, dann sind davon bevorzugt $C_1$-$C_8$-, besonders bevorzugt $C_1$-$C_6$-Alkylenreste. Beispiele für die soeben genannten $C_1$-$C_{10}$-A1kylreste sind Methyl, Ethyl, Propyl, Isopropyl, n-Butyl, Isobutyl, t-Butyl, Pentyl, Isopentyl, Hexyl, Heptyl, 3-Heptyl, Octyl, 2-Ethylhexyl, Nonyl und Decyl.

Die Zusammensetzungen enthalten als Komponente (a) vorzugsweise ein Gemisch von Verbindungen. Zusammensetzungen, welche als Komponente (a) nur eine Verbindung enthalten, sind jedoch auch Gegenstand der Erfindung und weisen die gleichen vorteilhaften Eigenschaften auf.
Bevorzugt enthalten die Zusammensetzungen als Verbindungen der Komponente (a) solche, worin

$R^1$ Butyl oder Octyl ist,
wenn Y für -S- steht,
$R^2$ $-(CH_2)_2-CO-$ ist, und,
wenn Y für -O- steht,
$R^2$ $-CO-R^3-CO-$ bedeutet und
$R^3$ $-CH=CH-$ ist.

Bei den Perchloraten der Komponente (b)

handelt es sich um
Verbindungen der allgemeinen Formel
$M(ClO_4)_n$
wobei M für ein ein- oder zweiwertiges Metall, beispielsweise für Na, K, Mg, Ca, Sr, Ba, Pb, Cu oder Zn steht. M kann auch für Ammonium stehen. Der Index n ist entsprechend der Wertigkeit von M 1 oder 2. Bevorzugt steht M für Na, K, Ca, Mg oder Zn.

Die Komponente (b) kann aus einer einzelnen Verbindung oder einem Gemisch von Perchloraten bestehen. Komponente (b) kann in einer Menge von beispielsweise 0,001 bis 5, zweckmäßig 0,01 bis 3, bevorzugt 0,05 bis 1,0 Gew.-Teilen, bezogen auf 100 Gew.-Teile [(c) + (d)], angewandt werden.

Das jeweilige Perchlorat kann in verschiedenen gängigen Formen eingesetzt werden; z.B als Salz oder wäßrige Lösung, aufgezogen auf ein Trägermaterial wie PVC, Ca-Silikat, Zeolithe oder Hydrotalcite, oder eingebunden durch chemische Reaktion in einen Hydrotalcit.

Die Zusammensetzungen enthalten die Komponenten (a) und (b) bevorzugt im Mengenverhältnis 0,8 bis 50 Gewichtsteile (a) zu 1 Gewichtsteil (b), vor allem 2 bis 35 Gewichtsteile (a) zu 1 Gewichtsteil (b).

Die Herstellung der Zusammensetzungen erfolgt nach bekannten Verfahren. Die Stabilisatoren werden den Polymerblends vor oder während der Verarbeitung in bekannter Weise zugemischt. Eine homogene Mischung kann z.B. vor der Verarbeitung mit Hilfe eines Heiz-Kühl-Mischers bei üblicherweise bis 120°C in der Heizphase erhalten werden.

Die Zusammensetzungen können vorteilhafterweise auch übliche Mengen weiterer, herkömmlicher PVC-Stabilisatoren und/oder weiterer Zusätze enthalten, beispielsweise Epoxyverbindungen, Metallseifen, das sind im wesentlichen Metallcarboxylate und Metallphenolate von Metallen der zweiten Haupt- und Nebengruppe des Periodensystems, oder auch anorganische Salze von Metallen der zweiten Nebengruppe des Periodensystems, sowie Antioxidantien.

Die soeben genannten weiteren Stabilisatoren werden bevorzugt in Mengen von jeweils 0,05 bis 6, insbesondere 0,1 bis 3 %, bezogen auf die gesamte Zusammensetzung, eingearbeitet.

Metallseifen sind in der Hauptsache Metallcarboxylate bevorzugt längerkettiger Carbonsäuren. Geläufige Beispiele sind Stearate und Laurate, auch Oleate und Salze kürzerkettiger Alkylcarbonsäuren. Oft verwendet man sog. synergistische Mischungen wie Barium/Zink-, Magnesium/Zink- , Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5th Ed. Vol. A16 (1985) S.361 ff).

Ebenfalls als zusätzliche Stabilisatoren können Metallcarboxylate und -phenolate von Metallen der zweiten Haupt- und Nebengruppe des Periodensystems, oder auch anorganische Salze von Metallen der zweiten Nebengruppe des Periodensystems, wie z.B. $ZnCl_2$, eingesetzt werden.

Beispiele von Metallcarboxylaten sind die Metallsalze von gesättigten, ungesättigten oder mit Hydroxylgruppen substituierten aliphatischen Carbonsäuren mit 6 bis 20 C-Atomen, wie Hexansäure, Heptansäure, Octansäure, 2-Ethylhexansäure, Undecylsäure, Laurinsäure, Myristinsäure, Palmitinsäure, Stearinsäure, 12-Oxystearinsäure, Ölsäure, Linolsäure oder Ricinolsäure. Ebenfalls von Interesse sind die Metallsalze von aromatischen Carbonsäuren, wie beispielsweise substituierte Phenylbenzoate. Bevorzugt sind Metalle aus der Reihe Ba, Sr, Ca, Mg, Zn und Cd. Bevorzugte Metallcarboxylate sind beispielsweise Ca- oder Zn-Stearat, Ba-p-tert-Butylbenzoat und Zn- und Ca-Oleat.

Als Metallphenolate kommen insbesondere die Metallsalze von Phenolen mit 6-20 C-Atomen in Frage, beispielsweise Alkylphenolen wie p-tert-Butyl-, p-Octyl-, p-Nonyl- oder p-Dodecylphenol. Ein Beispiel hierfür ist Ba-p-n-Nonylphenolat.

Bevorzugte Antioxidantien sind alkylierte Monophenole, Alkyliden-bis-phenole und mit sog. sterisch gehinderten Phenolresten substituierte Propionsäureester, z.B. 2,6-Di-tert-butyl-p-kresol, 2,2-Bis-(4'-hydroxyphenyl)-propan und β-(3,5-Di-tert-butyl-4-hydroxyphenyl)-propionsäure-n-octadecylester.

Je nach dem Verwendungszweck der Zusammensetzungen können vor oder mit der Einarbeitung des Stabilisators auch noch weitere, dem Fachmann bekannte Zusätze eingearbeitet werden, wie z.B. Gleitmittel (bevorzugt Montanwachse oder Glycerinester), Fettsäureester, Paraffine, Weichmacher, Füllstoffe, Ruß, Kaolin, $TiO_2$, Talk, Silikate, Hydrotalcite, Zeolithe, Glasfasern, Pigmente, Lichtstabilisatoren, UV-Absorber, Flammschutzmittel und Antistatika.

Bevorzugte derartige Zusätze sind Gleitmittel, Pigmente, Verarbeitungshilfen, Füllstoffe, Antioxidantien und/oder Lichtschutzmittel.

Als Verbindungen aus der Reihe der Hydrotalcite oder Zeolithe kommen sowohl die natürlich vorkommenden Mineralien als auch synthetisch hergestellte Verbindungen in Betracht. Die zusätzliche Verwendung von Hydrotalciten oder/und Zeolithen in den Zusammensetzungen ist bevorzugt, da diese Verbindungen die Stabilisierung synergistisch verstärken können.

Die chemische Zusammensetzung der Hydrotalcite und Zeolithe ist dem Fachmann bekannt.

Verbindungen aus der Reihe der Hydrotalcite können durch die allgemeine Formel III,

$$M^{2+}_{1-x}\cdot M^{3+}_{x}\cdot(OH)_2\cdot(A^{n-})_{x/n}\cdot mH_2O \qquad (III)$$

beschrieben werden,
wobei

- $M^{2+}$ = Mg, Ca, Sr, Zn, Sn und/oder Ni ist,
- $M^{3+}$ = Al, B oder Bi ist,
- $A^n$ ein Anion mit der Valenz n darstellt,
- n eine Zahl von 1-4 ist,
- x eine Zahl von 0-0,5 ist,
- m eine Zahl von 0-20 ist.

Bevorzugt ist

$A^n$ = $OH^-$, $Cl^-$, $Br^-$, $I^-$, $ClO_4^-$, $HCO_3^-$, $CH_3COO^-$, $C_6H_5COO$-, $CO_3^{2-}$, $SO_4^{2-}$,

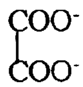,

$(CHOHCOO)_2^{2-}$, $(CHOH)_4CH_2OHCOO^-$. $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ oder $HPO_4^{2-}$ darstellt; weitere Beispiele finden sich in DE 41 06 403.

Andere Hydrotalcite, die zweckmäßig eingesetzt werden können, sind Verbindungen mit der allgemeinen Formel IIIa,

$$M^{2+}_{X}\,Al_2(OH)_{2x+6nz}(A^{n-})_2\cdot mH_2O \qquad (IIIa)$$

wobei in vorliegender Formel IIIa $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$,

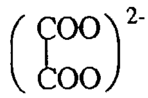,

$OH^-$ und $S^{2-}$ darstellt, wobei n die Valenz des Anions ist, m eine positive Zahl, vorzugsweise von 0,5 bis 15, darstellt und x und z positive Zahlen darstellen, wobei x vorzugsweise 2 bis 6 ist und z kleiner als 2 ist.

Beispiele für Hydrotalcite sind

$$Al_2O_3\cdot 6MgO\cdot CO_2\cdot 12H_2O,$$

$$Mg_{4,5}Al_2(OH)_{13}\cdot CO_3\cdot 3{,}5H_2O,$$

$$4MgO\cdot Al_2O_3\cdot CO_2\cdot 9H_2O,$$

$$4MgO\cdot Al_2O_3\cdot CO_2\cdot 6H_2O,$$

$$ZnO \cdot 3MgO \cdot Al_2O_3 \cdot CO_2 \cdot 8\text{-}9H_2O \text{ oder}$$

$$ZnO \cdot 3MgO \cdot Al_2O_3 \cdot CO_2 \cdot 5\text{-}6H_2O.$$

Zeolithe können durch die allgemeine Formel (IV)

$$M_{x/n}[(AlO_2)_x(SiO_2)_y] \cdot wH_2O \quad (IV)$$

beschrieben werden,
worin n die Ladung des Kations M;
M ein Element der ersten oder zweiten Hauptgruppe, wie Li, Na, K, Mg, Ca, Sr oder Ba;
y : x eine Zahl von 0,8 bis 15, bevorzugt von 0,8 bis 1,2; und
w eine Zahl von 0 bis 300, bevorzugt von 0,5 bis 30, ist.

Beispiele für Zeolithe sind Natriumalumosilikate der Formeln

$$Na_{12}Al_{12}Si_{12}O_{48} \cdot 27\ H_2O \text{ [Zeolith A]},$$

$$Na_6Al_6Si_6O_{24} \cdot 2\ NaX \cdot 7{,}5\ H_2O,\ X = OH, \text{Halogen}, ClO_4 \text{ [Sodalith]}$$

$$Na_6Al_6Si_{30}O_{72} \cdot 24\ H_2O,$$

$$Na_8Al_8Si_{40}O_{96} \cdot 24\ H_2O,$$

$$Na_{16}Al_{16}Si_{24}O_{80} \cdot 16\ H_2O,$$

$$Na_{16}Al_{16}Si_{32}O_{96} \cdot 16\ H_2O,$$

$$Na_{56}Al_{56}Si_{136}O_{384} \cdot 250\ H_2O, \text{ [Zeolith Y]}$$

$$Na_{86}Al_{86}Si_{106}O_{384} \cdot 264\ H_2O \text{ [Zeolith X]}$$

oder die durch teilweisen bzw. vollständigen Austausch der Na-Atome durch Li-, K-, Mg-, Ca-, Sr- oder Zn-Atome darstellbaren Zeolithe wie

$$(Na,K)_{10}Al_{10}Si_{22}O_{64} \cdot 20\ H_2O\ .$$

$$Ca_{4,5}Na_3[(AlO_2)_{12}(SiO_2)_{12}] \cdot 30\ H_2O$$

$$K_9Na_3[(AlO_2)_{12}(SiO_2)_{12}] \cdot 27\ H_2O$$

Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile [(c) +(d)] angewandt werden.

Die Komponenten (a) und (b) der Zusammensetzungen sowie optionale Zusätze können den zu stabilisierenden

Polymeren auch in Form eines Masterbatches zugesetzt werden. Dieser kann beispielsweise 10 bis 40 Gew.-% der Komponente (a), 1 bis 20 Gew.-% der Komponente (b), und Polymere der Komponenten (c) oder (d), weitere Stabilisatoren wie Verarbeitungshilfen, Gleitmittel, Flammschutzmittel oder eine Kombination dieser Stoffe enthalten.

Die Zusammensetzungen können durch Spritzgießen (Spritzguß) oder Extrusion zu Formteilen verarbeitet werden. Beim Spritzgießen handelt es sich um das wichtigste Verfahren zum Herstellen von Formteilen aus Plastomeren. Es ist dem Fachmann wohlbekannt und z.B. in Ullmanns Enzyklopädie der Technischen Chemie, Bd. 15, 304 ff beschrieben. Ebenso ist die Extrusion ein so geläufiges Verfahren, daß es für den Fachmann keiner näheren Erläuterung bedarf. Beschrieben ist es beispielsweise in "Concise Encyclopedia of Polymer Science and Engineering", J.I. Kroschwitz ed., John Wiley & Sons, 1990, pp. 363-7. Mit dem Extrusionsverfahren werden z.B. Folien, Profile und Rohre hergestellt.

Bevorzugt werden die Zusammensetzungen für die Herstellung von wärmeformbeständigen Artikeln wie Rohren, Fittings und Apparategehäusen verwendet.

Die folgenden Beispiele erläutern die Erfindung weiter, ohne sie jedoch in irgendeiner Weise zu beschränken. Teile und Prozente beziehen sich, wie auch in der übrigen Beschreibung, auf das Gewicht, sofern nichts anderes angegeben ist.

Beispiel 1:

Da die thermischen und mechanischen Belastungen von Polymeren simuliert werden, dient der beschriebene Brabender Test als Modellsystem für sowohl das Spritzgieß als auch das Extrusionsverfahren. Die erhaltenen Prüfkörper sind Modelle für Formkörper.

46 g der in der Tabelle I beschriebenen beiden PVC/ABS-Compounds werden in der Knetkammer eines Brabender Plasticorders bei 45 UpM und 190°C thermisch und frikativ (durch Scherkräfte) belastet. Im Abstand von jeweils 5 min werden aus der plastifizierten PVC/ABS-Masse Proben entnommen (ca. 0,5 g), welche anschließend bei 180°C innerhalb von 1,5 min zu Prüfkörpern verpreßt werden. Von diesen Mustern wird durch farbmetrische Bestimmung der Yellowness Index (YI; DIN 5033, ASTM 1925-70) ermittelt. Geringe Yellowness Indices bedeuten gute Wirkung des Stabilisators. Darüber hinaus erfolgt die Charakterisierung der Langzeit-Thermostabilität anhand der Zeitdauer bis zum Anstieg des Drehmoments durch Vernetzung des Polymermaterials (Brabender-Zersetzungszeit). Lange Zersetzungszeiten bedeuten demnach gute Stabilisierung. Die Ergebnisse sind in der folgenden Tabelle I zusammengestellt. Es zeigt sich, daß die Stabilisierung mit der Organozinnverbindung und $NaClO_4$ derjenigen mit den Organozinnverbindungen allein überlegen ist.

Tabelle I (Angaben in Gew.-Teilen)

| **Brabender-Hitzetest bei 190°C** | | |
|---|---|---|
| Mischung | **1** | **2** |
| PVC (K-Wert 50) | 50 | 50 |
| ABS | 50 | 50 |
| PMMA-Fließhilfe[1] | 2,0 | 2,0 |
| Äußeres Gleitmittel[2] | 4,0 | 4,0 |
| Kombinationsgleitmittel[3] | 0,8 | 0,8 |
| $TiO_2$ | 3,0 | 3,0 |
| Chloriertes Polyethylen | 3,0 | 3,0 |
| Dibutyl-Sn-Maleat | 0,5 | 0,5 |
| Dibutyl-Sn-mercaptopropionat | 1,5 | 1,5 |

$NaClO_4$

[1]Polymethylmetacrylat PARALOID® K 125 [2]hochmolekularer Mehrkomponentenester (LOXIOL® G70 S) [3]LOXIOL® GS 1809

| **Brabender-Zersetzungszeit [Minuten]** | **50** | **55** |
|---|---|---|
| **YI nach 15 Min.** | **18,0** | **17,6** |
| **YI nach 20 Min.** | **24,7** | **22,2** |

(fortgesetzt)

| **Brabender-Zersetzungszeit [Minuten]** | **50** | **55** |
|---|---|---|
| **YI nach 25 Min.** | **35,5** | **29,3** |
| **YI nach 30 Min.** | **50,6** | **39,2** |
| **YI nach 35 Min.** | **63,4** | **50,8** |
| **YI nach 40 Min.** | **70,9** | **59,7** |
| **YI nach 45 Min.** | **78,0** | **64,7** |
| **YI nach 50 Min.** | **Zers.** | **67,5** |

**Patentansprüche**

**1.** Verwendung von (a) mindestens einer Organozinnverbindung der Formel I oder II

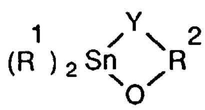

(I)

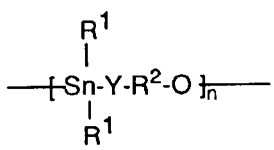

(II)

worin n eine Zahl von 1 bis 6 ist,
$R^1$ $C_4$-$C_8$-Alkyl bedeutet,
Y für -S- oder -O- steht,
wenn Y für -S- steht, $R^2$ $-(CH_2)_2-CO-$ oder

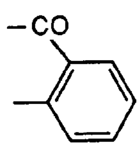

ist,
wenn Y für -O- steht, $R^2$ $-CO-R^3-CO-$ bedeutet, und
$R^3$ $C_1$-$C_{12}$ Alkylen, $C_2$-$C_{12}$-Alkenylen oder o- oder p-Phenylen darstellt, sowie
(b) mindestens einem Perchlorat eines ein- oder zweiwertigen Metalls
zur Herstellung von stabilisierten Formkörpern mit hoher Wärmeformbeständigkeit bestehend aus Polymerzusammensetzungen enthaltend
(c) 20-80 Gew.-Teilen eines Vinylchlorid-Homopolymeren (PVC),
(d) 80-20 Gew.-Teilen mindestens eines thermoplastischen Copolymerisats auf der Basis von Styrol und Acrylnitril,
im Spritzguß- oder Extrusionsverfahren.

**2.** Verwendung gemäß Anspruch 1, wobei

$R^1$ Butyl oder Octyl ist,
wenn Y für -S- steht,

$R^2$ $-(CH_2)_2-CO-$ ist, und,
wenn Y für -O- steht,
$R^2$ $-CO-R^3-CO-$ bedeutet und
$R^3$ $-CH=CH-$ ist.

**3.** Verwendung gemäß Anspruch 1, wobei Komponente (d) 80-20 Gew.-% mindestens eines Copolymerisats aus der Gruppe ABS und SAN ist.

**4.** Verwendung gemäß Anspruch 1, wobei Komponente (c) 25-50 Gew.-% PVC und Komponente (d) 75-50 Gew.-% mindestens eines Copolymerisats aus der Gruppe ABS und SAN sind.

**5.** Verwendung gemäß Anspruch 1, wobei Komponente (c) 40-75 Gew.-% PVC und Komponente (d) 60-25 Gew.-% mindestens eines Copolymerisats aus der Gruppe ABS und SAN sind.

**6.** Verwendung gemäß Anspruch 1, wobei Komponente (b) mindestens einer der Stoffe $NaClO_4$, $KClO_4$, $Ca(ClO_4)_2$ $Mg(ClO_4)_2$ oder $Zn(ClO_4)_2$ ist.

**7.** Verwendung gemäß Anspruch 1, wobei zusätzlich Gleitmittel, Pigmente, Verarbeitungshilfen, Füllstoffe, Antioxidantien und/oder Lichtschutzmittel vorhanden sind.